# EUROPÄISCHE PATENTSCHRIFT

(11) **EP 2 423 938 B1**
(45) Veröffentlichungstag und Bekanntmachung des Hinweises auf die Patenterteilung: **01.04.2015**
(21) Anmeldenummer: 11176296.9
(22) Anmeldetag: 02.08.2011
(51) Int. Cl.: H01H 71/10, H01H 71/30, H02H 1/06, H02H 3/087

(54) **Energieversorgung für eine elektronische Auslöseeinheit eines Schalters, insbesondere eines Leistungsschalters für Niederspannungen, und einen Schalter mit einer solchen Energieversorgung.**
Energy supply for an electronic trigger unit of a switch, in particular a circuit breaker for low voltages and a switch with such an energy supply
Alimentation en énergie pour une unité de déclenchement électronique d'un commutateur, notamment un commutateur de puissance pour basses tensions et un commutateur doté d'une telle alimentation en énergie

(30) Priorität: 26.08.2010 DE 102010036078
(43) Veröffentlichungstag der Anmeldung: 29.02.2012
(73) Patentinhaber: Siemens Aktiengesellschaft, 80333 München (DE)
(72) Erfinder: Kiendl, Thomas, 92533 Wernberg-Köblitz (DE); Götz, Josef, 92272 Freudenberg - Aschach (DE)

(56) Entgegenhaltungen:
- EP-A1- 0 043 020
- DE-A1-102006 037 230
- US-A1- 2006 119 344

## Beschreibung

Die Erfindung betrifft eine Energieversorgung für eine elektronische Auslöseeinheit eines Schalters, insbesondere eines Leistungsschalters für Niederspannungen, und einen Schalter mit einer solchen Energieversorgung gemäß den Oberbegriffen der Ansprüche 1 und 2.

Leistungsschalter insbesondere für Niederspannungen sind bekannt, werden auch bei Gleichstrombetrieb eingesetzt und abgangsseitig mit zumindest einer Last verbunden. Über den Lastwiderstand fließt unterhalb des Nennstroms des Schalters ein der Belastung entsprechender Gleich- oder Wechselstrom durch einen Leiter, der durch den Schalter verläuft. Bei geschlossenem Schalter liegen Kontaktelemente aneinander an, die zum Öffnen des Schalters voneinander getrennt werden. Eine elektronische Auslöseeinheit löst bei Überschreitung eines vorgegebenen Stromgrenzwerts die Trennung der Kontaktelemente aus; dies ist bei Auftreten eines Über- und Kurzschlussstroms der Fall. Zur Energieversorgung der Auslöseeinheit wird am Leiter eine Spannung abgegriffen, die bei geschlossenem Schalter am Lastwiderstand und bei geöffnetem Schalter an den Schaltkontakten abfällt. Der Spannungsabgriff setzt bei geschlossenem Schalter also jeweils das Vorhandensein einer nicht zu geringen Last voraus.

Bei einem Kurzschluss wird die Last und somit der Spannungsabfall am Lastwiderstand allerdings so klein, dass die Energieversorgung der Auslöseeinheit nicht mehr sichergestellt ist.

Nachteilig ist also, dass für den Kurzschlussfall jeweils eine zweite Energieversorgung der Auslöseeinheit zusätzlich zum Spannungsabgriff vorgesehen sein muss.

Die Aufgabe der Erfindung ist es, die Energieversorgung der Auslöseeinheit bei Gleich- oder Wechselstrombetrieb auch im Kurzschlussfall sicherzustellen.

Die Aufgabe wird bezogen auf die Energieversorgung durch die Merkmale des Anspruchs 1 und bezogen auf den Schalter durch die Merkmale des Anspruchs 2 gelöst.

Die Lösung sieht bezogen auf die Energieversorgung vor, dass zwischen Last und Spannungsabgriff eine Induktivität in den Leiter geschaltet und so bemessen ist, dass bei sich zeitlich änderndem Strom im Verlauf eines Kurzschlusses die als Spannungsabfall an der Induktivität abgegriffene Spannung die Versorgung der Auslöseeinheit mit elektrischer Energie für eine vorgegebene Mindestzeit sicherstellt.

Die Lösung sieht bezogen auf den Schalter vor, dass die Energieversorgung zwischen Last und Spannungsabgriff eine Induktivität aufweist, die in den Leiter geschaltet und so bemessen ist, dass bei sich zeitlich änderndem Strom im Verlauf eines Kurzschlusses die als Spannungsabfall an der Induktivität abgegriffene Spannung zumindest für eine vorgegebene Mindestzeit die Versorgung der Auslöseeinheit mit elektrischer Energie sicherstellt.

Die Erfindung wird nachfolgend anhand einer Zeichnung näher beschrieben. Es zeigen:
- Fig. 1: eine elektrische Schaltung mit einer Last, die über einen Schalter an eine Gleichspannung angeschlossen ist und
- Fig. 2: die Schaltung gemäß Fig. 1 im Falle eines Kurzschlusses.

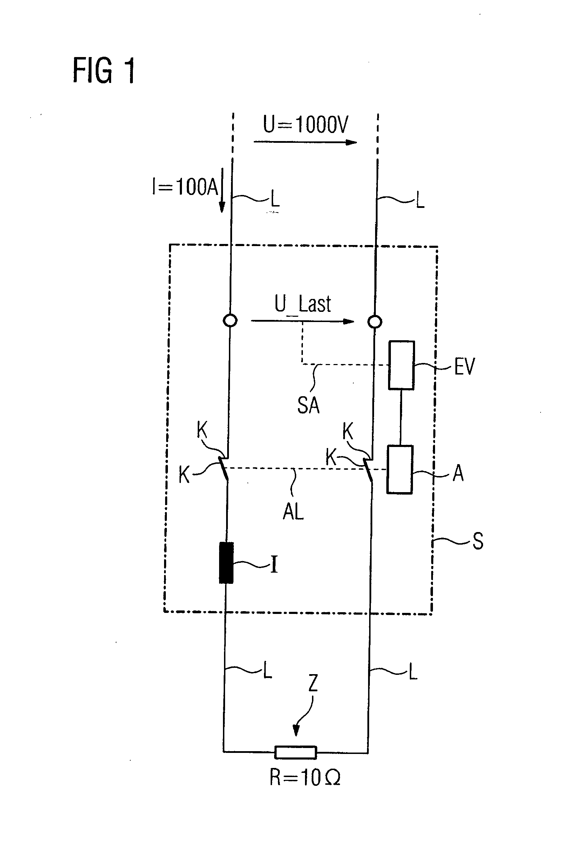

Fig. 1 zeigt eine Last Z mit einem Lastwiderstand R, welche über elektrische Leiter L an eine Gleichspannung U (Niederspannung) von 1000 V angeschlossen ist. Die Gleichspannung U bewirkt hier einen Gleichstrom I von 100 A durch den Lastwiderstand R. Zwischen die Leiter L und dem Lastwiderstand R ist ein Schalter S, hier ein Leistungsschalter für Niederspannungen, angeordnet, der abgangsseitig mit dem Lastwiderstand R verbunden ist. Die Leiter L verlaufen wie dargestellt durch den Schalter S.

Der Schalter S umfasst eine elektronische Auslöseeinheit A, die bei Überschreitung eines vorgegebenen Stromgrenzwerts, insbesondere bei einem Über- und/oder Kurzschlussstrom, die Öffnung des Schalters S auslöst (gestrichelte Linie AL), dessen Kontaktelemente K bei geschlossenem Schalter S aneinander anliegen und zum Öffnen voneinander getrennt werden.

Ein Spannungsabgriff SA (gestrichelte Linie) greift am Leiter L eine Spannung U Last ab, die dem Spannungsabfall am Lastwiderstand R entspricht und welche die Auslöseeinheit A mit Strom versorgt (Energieversorgung EV) und damit deren Versorgung mit elektrischer Energie sicherstellt.

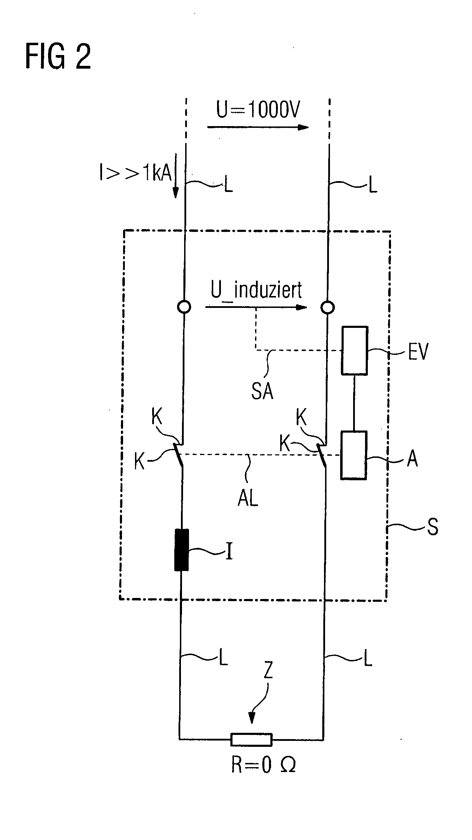

Diese Energieversorgung funktioniert solange, wie kein Kurzschluss auftritt, da dann der Lastwiderstand R sehr klein bzw. zu Null wird, was in Fig. 2 dargestellt ist.

Deshalb ist zwischen Lastwiderstand R (Last Z) und Spannungsabgriff SA eine Induktivität I in den Leiter L geschaltet, die so bemessen ist, dass der sich zeitlich ändernde Strom im Verlauf eines Kurzschlusses einen Spannungsabfall U_induziert an der Induktivität I bewirkt, dass die abgegriffene Spannung (Spannungsabgriff SA) für eine vorgegebene Mindestzeit die

Versorgung der Auslöseeinheit A mit elektrischer Energie im Falle eines Kurzschlusses sicherstellt.

## Patentansprüche

1. Energieversorgung (EV) für eine elektronische Auslöseeinheit (A) eines Schalters (S), insbesondere eines Leistungsschalter für Niederspannungen, der abgangsseitig mit einer Last (Z) verbunden ist, über deren Lastwiderstand (R) ein Gleich- oder Wechselstrom (I) fließt,
wobei ein Leiter (L) durch den Schalter (S) verläuft,
wobei bei geschlossenem Schalter (S) Kontaktelemente (K) aneinander anliegen, die zum Öffnen des Schalters (S) voneinander getrennt werden,
wobei die elektronische Auslöseeinheit (A) bei Überschreitung eines vorgegebenen Stromgrenzwerts, insbesondere bei einem Über- und/oder Kurzschlussstrom, die Trennung der Kontaktelemente (K) auslöst,
mit einem Spannungsabgriff (SA), der am Leiter (L) eine Spannung (U_Last) abgreift, die als Spannungsabfall am Lastwiderstand (R) die Versorgung der Auslöseeinheit (A) mit elektrischer Energie sicherstellt,
**dadurch gekennzeichnet**,
dass zwischen Last (Z) und Spannungsabgriff (SA) eine Induktivität (I) in den Leiter (L) geschaltet und so bemessen ist, dass bei sich zeitlich änderndem Strom im Verlauf eines Kurzschlusses die als Spannungsabfall an der Induktivität (I) abgegriffene Spannung (U_induziert) für eine vorgegebene Mindestzeit die Versorgung der Auslöseeinheit (A) mit elektrischer Energie sicherstellt.

2. Schalter (S), insbesondere Leistungsschalter für Niederspannungen, der abgangsseitig mit einer Last (Z) verbunden ist, über deren Lastwiderstand (R) ein Gleich- oder Wechselstrom (I) fließt,
mit einem durch den Schalter (S) verlaufenden Leiter (L),
mit bei geschlossenem Schalter (S) aneinander anliegenden Kontaktelementen (K), die zum Öffnen des Schalters (S) voneinander getrennt werden,
mit einer elektronischen Auslöseeinheit (A), die bei Überschreitung eines vorgegebenen Stromgrenzwerts, insbesondere bei einem Über- und/oder Kurzschlussstrom, die Trennung der Kontaktelemente (K) auslöst, und
mit einem Spannungsabgriff (SA), der zur Energieversorgung (EV) der Auslöseeinheit (A) am Leiter (L) eine Spannung (U_Last) abgreift, die als Spannungsabfall am Lastwiderstand (R) die Versorgung der Auslöseeinheit (A) mit elektrischer Energie sicherstellt,
**dadurch gekennzeichnet**,
dass die Energieversorgung (EV) zwischen Last (Z) und Spannungsabgriff (SA) eine Induktivität (I) aufweist, die in den Leiter (L) geschaltet und so bemessen ist, dass bei sich zeitlich änderndem Strom im Verlauf eines Kurzschlusses die als Spannungsabfall an der Induktivität (I) abgegriffene Spannung (U_induziert) zumindest für eine vorgegebene Zeit die Versorgung der Auslöseeinheit (A) mit elektrischer Energie sicherstellt.

## Claims

1. Power supply (EV) for an electronic tripping unit (A) for a switch (S), in particular a circuit breaker for low voltages, which is connected on the outgoer side to a load (Z) via whose load resistance (R) a direct current or alternating current (I) flows,
with a conductor (L) running through the switch (S),
with contact elements (K) resting on one another when the switch (S) is closed and being disconnected from one another in order to open the switch (S),
with the electronic tripping unit (A) initiating the disconnection of the contact elements (K) when a predetermined current limit value is exceeded, in particular in the event of an overcurrent and/or short-circuit current,
having a voltage tap (SA), which taps off a voltage (U_load) on the conductor (L), which voltage (U_load) ensures the supply of electrical power to the tripping unit (A), as voltage drop across the load resistance (R), **characterized in that** an inductance (I) is connected in the conductor (L) between the load (Z) and the voltage tap (SA) and is of such a magnitude that, when the current changes over time during the course of a short circuit, the voltage (U_induced) which is tapped off as the voltage drop across the inductance (I) ensures the supply of electrical power to the tripping unit (A) for a predetermined minimum time.

2. Switch (S), in particular a circuit breaker for low voltages, which is connected on the outgoer side to a load (Z) via whose load resistance (R) a direct current or alternating current (I) flows,
having a conductor (L) which runs through the switch (S), having contact elements (K) which rest on one another when the switch is closed (S) and are disconnected from one another in order to open the switch (S),
having an electronic tripping unit (A) which initiates the disconnection of the contact elements (K) when a predetermined limit current value is exceeded, particularly in the event of an overcurrent and/or short-circuit current and
having a voltage tap (SA) which taps off a voltage (U_load) on the conductor (L) in order to supply power (EV) to the tripping unit (A), which voltage (U_load) ensures the supply of electrical power to the tripping unit (A), as voltage drop across the load resistance (R)
**characterized**
in that
the power supply (EV) has an inductance (I) between the load (Z) and the voltage tap (SA), which inductance (I) is connected in the conductor (L) and is of such a magnitude that when the current changes over time during the course of a short circuit, the voltage (U_induced) which is tapped off as the voltage drop across the inductance (I) ensures the supply of electrical power to the tripping unit (A) at least for a predetermined time.

## Revendications

1. Alimentation en énergie (EV) pour une unité de déclenchement électronique (A) d'un commutateur (S), en particulier d'un commutateur de puissance pour basses tensions qui est connecté, côté sortie, à une charge (Z) via la résistance de charge (R) de laquelle passe un courant continu ou alternatif (I),
un conducteur (L) passant par le commutateur (S),
des éléments de contact (K), qui sont séparés les uns des autres pour ouvrir le commutateur (S), étant appliqués l'un contre l'autre lorsque le commutateur (S) est fermé,
l'unité de déclenchement électronique (A) déclenchant la séparation des éléments de contact (K) au dépassement d'une valeur limite prédéfinie de courant, en particulier lors d'une surintensité et/ou d'un courant de court-circuit,
comportant une prise de tension (SA) qui prélève, au niveau du conducteur (L), une tension (U_Last) qui assure, en tant que chute de tension au niveau de la résistance de charge (R), l'alimentation de l'unité de déclenchement (A) en énergie électrique,
**caractérisée en ce qu'**une inductance (I) est connectée au conducteur (L) entre la charge (Z) et la prise de tension (SA) et est dimensionnée de telle sorte que, lorsque le courant se modifie dans le temps au cours d'un court-circuit, la tension (U_induziert) prélevée en tant que chute de tension au niveau de l'inductance (I) assure, pour une durée minimale prédéfinie, l'alimentation de l'unité de déclenchement (A) en énergie électrique.

2. Commutateur (S), en particulier commutateur de puissance pour basses tensions qui est connecté, côté sortie, à une charge (Z) via la résistance de charge (R) de laquelle passe un courant continu ou alternatif (I), comportant :
un conducteur (L) passant par le commutateur (S) ;
des éléments de contact (K) appliqués l'un contre l'autre lorsque le commutateur (S) est fermé et qui sont séparés les uns des autres pour ouvrir le commutateur (S) ;
une unité de déclenchement électronique (A) qui déclenche la séparation des éléments de contact (K) au dépassement d'une valeur limite prédéfinie de courant,
en particulier lors d'une surintensité et/ou d'un courant de court-circuit, et
une prise de tension (SA) qui, aux fins de l'alimentation en énergie (EV) de l'unité de déclenchement (A), prélève, au niveau du conducteur (L),
une tension (U_Last) qui assure, en tant que chute de tension au niveau de la résistance de charge (R),
l'alimentation de l'unité de déclenchement (A) en énergie électrique,
**caractérisé en ce que** l'alimentation en énergie (EV) présente, entre la charge (Z) et la prise de tension (SA), une inductance (I) qui est connectée au conducteur (L) et est dimensionnée de telle sorte que, lorsque le courant se modifie dans le temps au cours d'un court-circuit, la tension (U_induziert) prélevée en tant que chute de tension au niveau de l'inductance (I) assure,
au moins pour une durée prédéfinie, l'alimentation de l'unité de déclenchement (A) en énergie électrique.
